# EUROPÄISCHE PATENTSCHRIFT

(11) **EP 2 819 207 B1**
(45) Veröffentlichungstag und Bekanntmachung des Hinweises auf die Patenterteilung: **27.09.2017**
(21) Anmeldenummer: 13003227.9
(22) Anmeldetag: 25.06.2013
(51) Int. Cl.: H01M 2/10, A45F 3/10, A45F 3/14, A01D 34/78, H01M 10/42

(54) **Kombination aus Tragesystem, Batterie und anzutreibendem Gerät**
Combination of a support system, battery and driven device
Combinaison d'un système de support, d'une batterie et d'un appareil à entraîner

(43) Veröffentlichungstag der Anmeldung: 31.12.2014
(73) Patentinhaber: OUTILS WOLF, 67165 Wissembourg Cedex (FR)
(72) Erfinder:
(74) Vertreter: Lemcke, Brommer & Partner Patentanwälte Partnerschaft mbB

(56) Entgegenhaltungen:
- EP-A1- 2 605 309
- JP-A- 2011 216 304
- US-A- 5 607 794

## Beschreibung

Die Erfindung betrifft eine Kombination aus einem auf dem Rücken eines Benutzers zu tragenden Tragesystem, zumindest einer aufladbaren Batterie und einem zu betreibenden elektrischen Gerät mit den Merkmalen des Oberbegriffs von Patentanspruch 1.

Derartige Kombinationen sind etwa durch die DE 10 2011 051 357 A1 oder die EP 2 477 303 A2 bekannt geworden. Sie bieten den Vorteil, dass man nur eine Batterie für unterschiedliche elektrische Geräte benötigt. Die vorliegende Erfindung zielt dabei vor allem auf solche elektrischen Geräte, die von Hand bewegt werden, etwa Rasenmäher, Heckenscheren, Motorsägen, Kehrgeräte und dergleichen.

Damit die Leitungsverluste bei der Stromübertragung in der flexiblen Leitung von der Batterie zu dem elektrischen Gerät nicht zu hoch werden, ist es außerdem durch die WO 1998/048470 A1 bekannt, für die Batterie am Tragesystem eine deutlich höhere Spannung vorzusehen als sie von dem anzutreibenden elektrischen Gerät verlangt wird. Zur Anpassung der zu hohen Batteriespannung an die zum Gerät passende Sollspannung wird ein Adapter eingesetzt. Dieser Adapter ist am geräteseitigen Ende der flexiblen Verbindungsleitung angeordnet, so dass in der Verbindungsleitung eine höhere Spannung, dafür aber eine geringe Stromstärke mit entsprechend geringem Leitungsverlust vorliegt.

Außerdem ist es durch die US 5,607,794 bekannt, eine Batterie unlösbar in einem geschlossenen Gehäuse unterzubringen. Dieses Gehäuse hat an seiner Unterseite ein festes Kontaktpaar, das intern mit den Batteriepolen verbunden ist. Mit dieser Unterseite ist das Batteriegehäuse auf eine untere Basisplatte aufschiebbar. Diese Basisplatte weist von außen zugängliche Kontakte auf, die beim Aufschieben mit dem vorgenannten Kontaktpaar in Verbindung gelangen. An diese äußeren Kontakte kann ein Kabel angeschlossen werden, um eine elektrische Verbindung mit einem anzutreibenden elektrischen Gerät herzustellen.

Schließlich ist es durch die JP 2011 216 304 bekannt, eine Batterie lösbar an einem Tragesystem anzubringen. Bei Verwendung dieser Batterie zum Antrieb elektrischer Geräte bleibt sie mit dem Tragesystem verbunden. Die elektrische Verbindung mit dem anzutreibenden Gerät erfolgt über eine flexible Verbindungsleitung.

Ausgehend von diesem Stand der Technik liegt der vorliegenden Erfindung die Aufgabe zugrunde, den Batteriebetrieb handgeführter Geräte noch weiter zu verbessern, insbesondere den Einsatzbereich der Batterien für unterschiedliche Geräte zu vergrößern. Dabei soll sich die Erfindung durch hohes Kosten/Nutzen-Verhältnis auszeichnen.

Diese Aufgabe wird bei der eingangs erwähnten Kombination erfindungsgemäß durch die Merkmale des kennzeichnenden Teils von Patentanspruch 1 gelöst.

Hierdurch ergibt sich der Vorteil, dass die Batterie nicht auf die Anwendung am Tragesystem beschränkt ist, sondern auch direkt - ohne Tragesystem - auf das gewünschte elektrische Gerät aufgesetzt werden kann, wobei es gleichzeitig elektrisch an das Gerät angeschlossen und mechanisch oder magnetisch mit ihm verbunden wird. Es können also erfindungsgemäß sowohl relativ schwere, fahrbare Geräte wie Rasenmäher, Vertikutierer, Kehrmaschinen etc. als auch vom Benutzer zu tragende Geräte wie Heckenscheren, Motorsägen etc. nunmehr von ein und derselben Batterie versorgt werden - sei es wie im erstgenannten Fall wo die Batterie direkt an das anzutreibende Gerät montiert wird oder wie im zweitgenannten Fall wo die Batterie am Tragesystem montiert wird.

Im Gegensatz zum herkömmlichen Stand der Technik wird also nur noch eine Batterie benötigt, gleichgültig, ob sie elektrisch und mechanisch oder magnetisch mit dem gewünschten Gerät oder stattdessen mit dem Tragesystem verbunden werden soll. Außerdem ist es ein Vorteil, dass keine Zwischenelemente zwischen Batterie einerseits und Gerät oder Tragesystem andererseits erforderlich sind.

Durch den alternativen Anschluss der Batterie am Tragesystem bleibt der Vorteil gewahrt, dass elektrische Geräte vom Batteriegewicht entlastet werden und somit ihre Handhabung erleichtert wird.

In Weiterbildung der Erfindung empfiehlt es sich, dass die mechanischen Verbindungselemente der Batterie und/oder des Tragesystems und/oder des elektrischen Gerätes zumindest teilweise elastisch ausgebildet sind, derart, dass sie eine Schnappverbindung zwischen der Batterie einerseits und dem Tragesystem oder dem elektrischen Gerät andererseits bewirken. Dies hat den Vorteil, dass das Anschließen wie auch das Abnehmen der Batterie oder ihr Wechsel vom Tragesystem zum elektrischen Gerät und umgekehrt schnell und einfach, insbesondere ohne Werkzeug, von statten geht.

Besonders günstig ist es in diesem Zusammenhang, wenn die mechanischen Verbindungselemente aus zwei verschiedenen Gattungen bestehen, nämlich einer ersten Gattung, die eine leichte Schwenkbewegung der Batterie relativ zum Tragesystem oder zu dem elektrischen Gerät gestattet, und einer zweiten Gattung, die die genannte Schwenkbewegung bei Erreichen der Anschlussposition der Batterie blockiert. Diese Schwenklagerung und automatische Blockierung der Schwenkbewegung bei Erreichen der Anschlussposition der Batterie erhöht nochmals den Bedienungskomfort beim An- oder Abbauen der Batterie.

Vorzugsweise wird dabei die Schnappverbindung bei den Verbindungselementen der zweiten Gattung, also bei den die Schwenkbewegung blockierenden Verbindungselementen erzeugt, weil man dadurch die anderen Verbindungselemente weniger elastisch und mit starkem formschlüssigen Hintergriff und entsprechend guten Führungseigenschaften für die Schwenkbewegung ausbilden kann. Das Zusammenführen der elektrischen Anschlüsse wie auch das Zusammenführen der elastischen Verbindungselemente für die Schnappverbindung wird dadurch begünstigt.

Grundsätzlich können die zur Realisierung einer Schnappverbindung elastisch ausgebildeten Verbindungselemente wahlweise an der Batterie und/oder am Tragesystem und/oder an dem elektrischen Gerät angeordnet sein. Aus praktischen Gründen empfiehlt es sich aber, diese elastischen Verbindungselemente an der Batterie, insbesondere am äußeren Rand der Batterie vorzusehen, vorzugsweise so, dass sie durch das Batteriegehäuse abgedeckt und geschützt sind. Hierzu hat es sich als besonders zweckmäßig erwiesen, wenn die Batterie ein Gehäuse mit überstehendem Rand aufweist und dass unterhalb dieses überstehenden Randes zumindest die Verbindungselemente für die Schnappverbindung der Batterie angeordnet sind.

Um die Schnappverbindung zwischen der Batterie einerseits und dem Tragesystem bzw. dem elektrischen Gerät andererseits bedienerfreundlich und trotzdem stabil zu gestalten, empfiehlt es sich, dass die Verbindungselemente der vorerwähnten ersten Gattung und diejenigen der vorerwähnten zweiten Gattung annähernd an entgegengesetzten Bereichen der Batterie angeordnet sind.

Zu dem gleichen Zweck empfiehlt es sich, dass die Batterie im Bereich ihrer elastisch ausgebildeten Verbindungselemente einen Handgriff aufweist, so dass sie bequem vom Tragesystem oder von dem elektrischen Gerät abgezogen werden kann. Ihre Handhabung wird dadurch nochmals erleichtert.

Zur stabilen Aufnahme der Batterie hat es sich als zweckmäßig erwiesen, dass das Tragesystem oder das elektrische Gerät eine starre, plattenartige Basis aufweisen, an der die mit der Batterie korrespondierenden elektrischen Anschlüsse und die mechanischen Befestigungselemente angeordnet sind und dass die elektrischen Anschlüsse mit der Anschlussbuchse für die flexible Leitung verbunden sind.

Außerdem empfiehlt es sich, dass die Batterie selbst mit Überlast-Sicherungen für den Batterie-Ausgang und für den Aufladevorgang bestückt ist.

Nicht zuletzt bietet die Erfindung den Vorteil, dass mit nahezu entladener Batterie gearbeitet werden kann, indem das Tragesystem mit zwei Anschlussbuchsen bestückt wird, von denen die eine an ein Ladegerät, die andere an das anzutreibende Gerät angeschlossen wird. Dies ist von besonderem Vorteil, wenn keine aufgeladene Ersatzbatterie zur Verfügung steht.

Für die konstruktive Ausbildung der Batterie hat es sich als zweckmäßig erwiesen, dass sie ein Gehäuse aufweist, dessen Größe auf die maximal für ein elektrisches Gerät erforderliche Zellen-Anzahl ausgelegt ist und das auch die Aufnahme unterschiedlicher Zellen erlaubt. Dadurch behält man bei unterschiedlichen Batterie-Kapazitäten stets die gleiche Gehäuseform und die gleichen Abmessungen, so dass die Batterie unabhängig von ihrer Kapazität stets mit dem Tragesystem und dem gewünschten elektrischen Gerät kompatibel ist.

Weitere Merkmale und Vorteile der Erfindung ergeben sich aus der nachfolgenden Beschreibung eines Ausführungsbeispieles und aus der Zeichnung; dabei zeigt:
- Figur 1: ein Schrägbild des Tragesystems ohne Batterie;

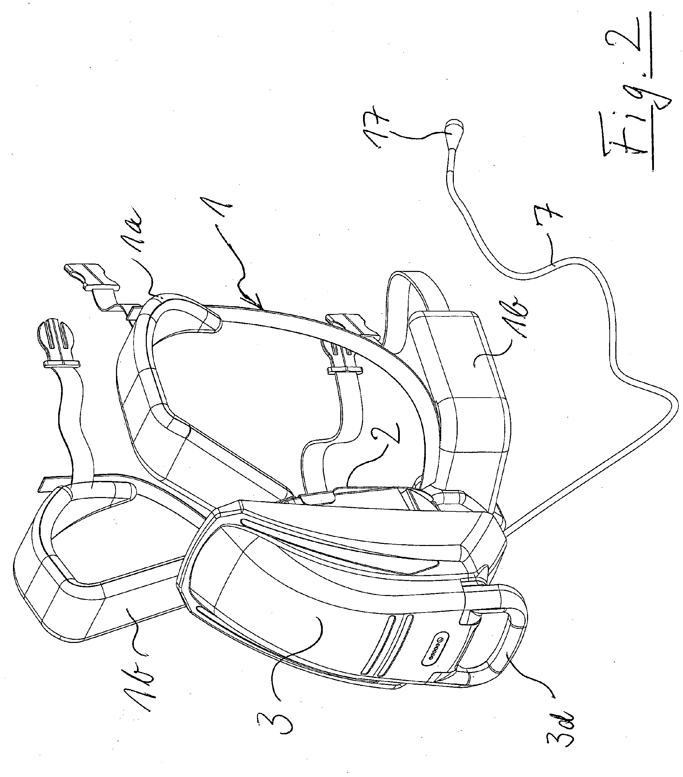

- Figur 2: das gleiche Tragesystem mit anmontierter Batterie;
- Figur 3: das Tragesystem mit Batterie gemäß Figur 2 aus anderer Blickrichtung;
- Figur 4: die Basis des Tragesystems (ohne Gurte), jedoch mit einseitig gelöster Batterie;
- Figur 5: die Batterie;
- Figur 6: einen Schnitt durch die Verbindungselemente der Batterie und des Tragesystems;
- Figur 7: die gleiche Batterie nach ihrer Verrastung an einem Rasenmäher;
- Figur 8: den Rasenmäher gemäß Figur 6 bei abgenommener Batterie.

In den Figuren ist das Tragesystem mit dem Bezugseichen 1 markiert. Es besteht im Ausführungsbeispiel aus einem rucksackähnlichen Gurtsystem mit zwei Schultergurten 1a und einem Hüftgurt 1b.

Das Tragesystem 1 weist an der dem Rücken des Benutzers zugeordneten Seite eine Basis 2 auf. Diese Basis dient an ihrer vom Benutzer abgewandten Seite zur Montage einer in den folgenden Figuren dargestellten Batterie 3.

Zu diesem Zweck sind an der Basis mehrere mechanische Verbindungselemente 4a, 4b und 4c angeordnet, die mit passenden Verbindungselementen an der Batterie 3 korrespondieren und deren lösbare, aber stabile Arretierung an der Basis 2 garantieren. Alternativ könnte an Stelle dieser mechanischen Verbindungselemente eine Magnetverbindung zwischen der Basis 2 und der Batterie 3 vorgesehen sein.

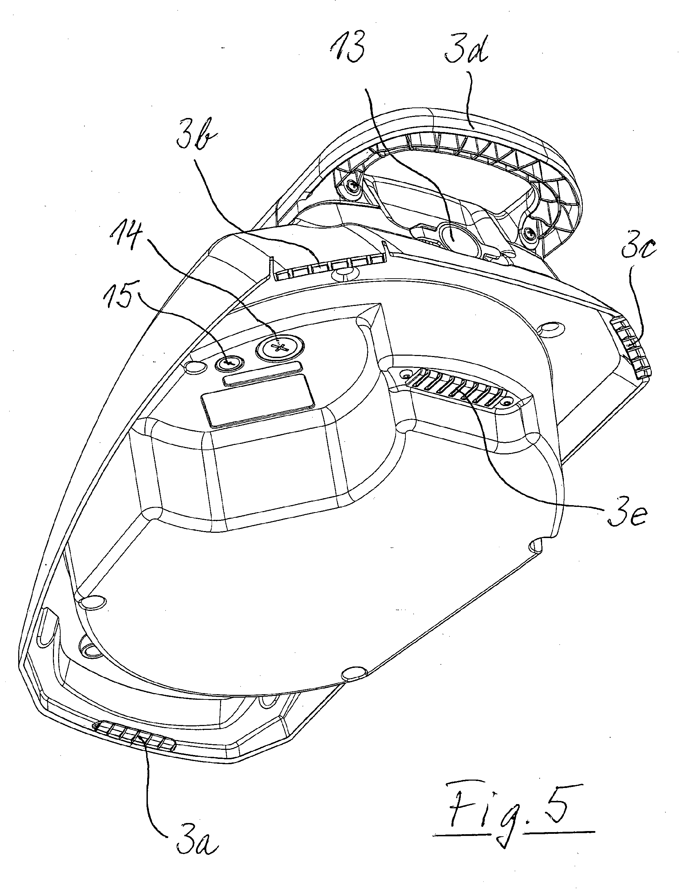

Des Weiteren weist die Basis 2 elektrische Kontakte 5 auf, die so positioniert sind, dass sie bei an der Basis 2 montierter Batterie 3 mit deren elektrischen Anschlüssen (3e) korrespondieren, vergleiche Figur 5.

Die elektrischen Kontakte 5 sind ihrerseits direkt oder über eine Steckverbindung mit einer flexiblen Leitung 7 verbunden, die an ihrem freien Ende eine Anschlussbuchse 17 trägt, um elektrische Energie von der Batterie 3 auf ein anzutreibendes elektrisches Gerät zu übertragen.

Selbstverständlich kann die Anschlussbuchse 17 auch unmittelbar am Tragesystem, insbesondere an deren Basis 2, montiert sein, denn meist haben die anzutreibenden elektrischen Geräte bereits selbst eine flexible Anschlussleitung, die dann in die Anschlussbuchse 17 eingesteckt werden kann unter Verzicht auf die Leitung 7.

Die mechanischen Verbindungselemente an der Basis 2 bestehen aus einer randständigen Kante 4a, die etwa parallel zur Basis oder etwa in deren Ebene verläuft und aus zwei nahe dem entgegengesetzten Rand der Basis angeordneten Vorsprüngen 4b und 4c. Die Funktion dieser Verbindungselemente wird nachfolgend erläutert.

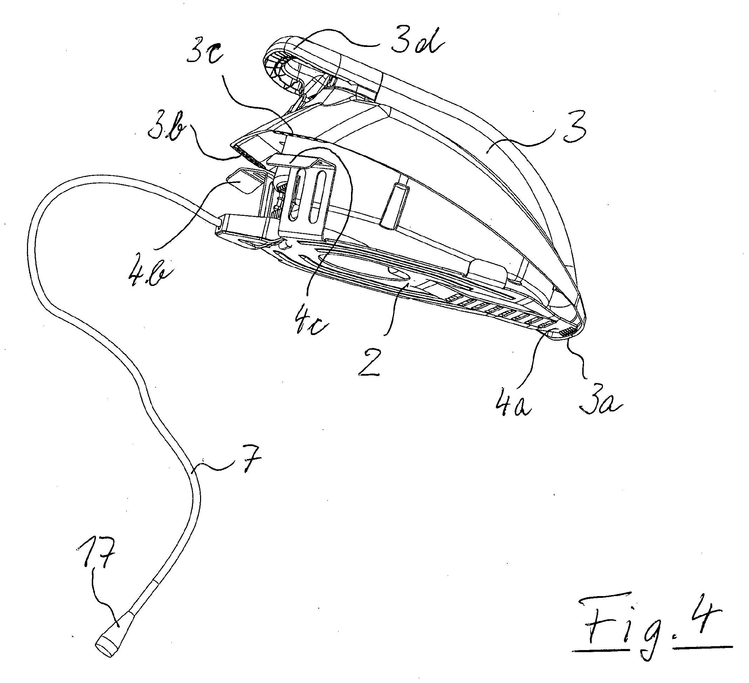

In den Figuren 4 bis 6 erkennt man, dass die Batterie 3 an ihrem einen Ende durch entsprechende, etwa hakenförmige Ausbildung ihres Randes 3a eine randständige Kante 4a der Basis 2 übergreift, wobei das Übergreifen so ausgebildet ist, dass die Batterie 3 um die randständige Kante 4a herum eine gewisse Schwenkbewegung durchführen kann, die Kante 4a also gewissermaßen als Schwenkachse fungiert.

Am gegenüberliegenden Rand weist die Batterie 3 einen nachgiebigen unteren Rand mit nach innen ragenden Vorsprüngen 3b und 3c auf, die mit den Vorsprüngen 4b und 4c der Basis 2 korrespondieren, derart, dass die Vorsprünge, wenn sie einander unter elastischer Aufweitung passieren, eine Schnappverbindung eingehen und so die Batterie an der Basis lösbar festhalten.

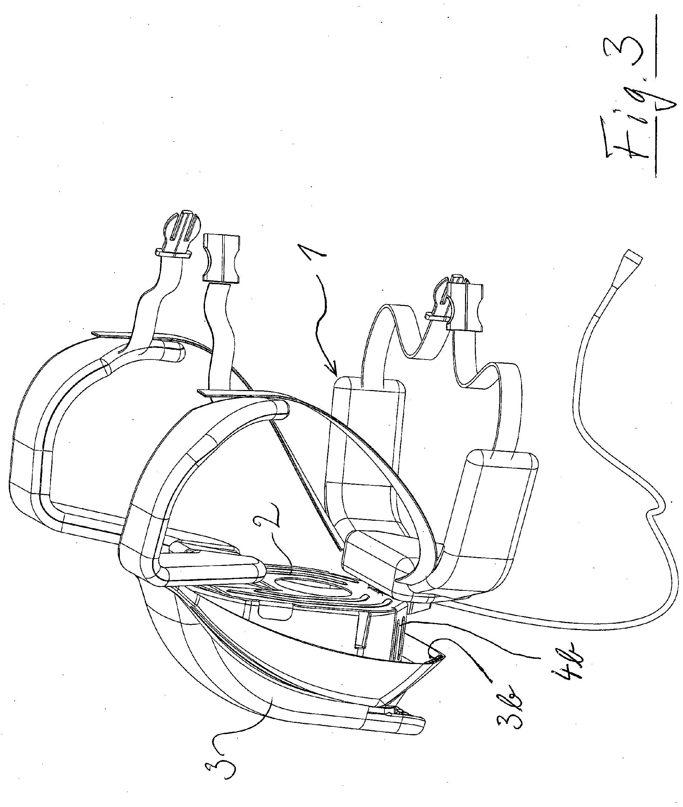

In Figur 4 sind die innenseitigen Vorsprünge 3b und 3c der Batterie noch ein Stück von den Vorsprüngen 4b und 4c entfernt. Wird die Batterie nun weiter gegen die Basis 2 geschwenkt, so passieren die Vorsprünge 3b und 3c schließlich die Vorsprünge 4b und 4c und schnappen unterhalb derselben ein, wie dies in Figur 3 und 5 gezeigt ist. Die Batterie 3 ist dann fest mit der Basis 2 und damit auch dem Tragesystem 1 verbunden. Gleichzeitig ist sie elektrisch an die elektrischen Kontakte 5 und somit an die Anschlussbuchse 17 angeschlossen.

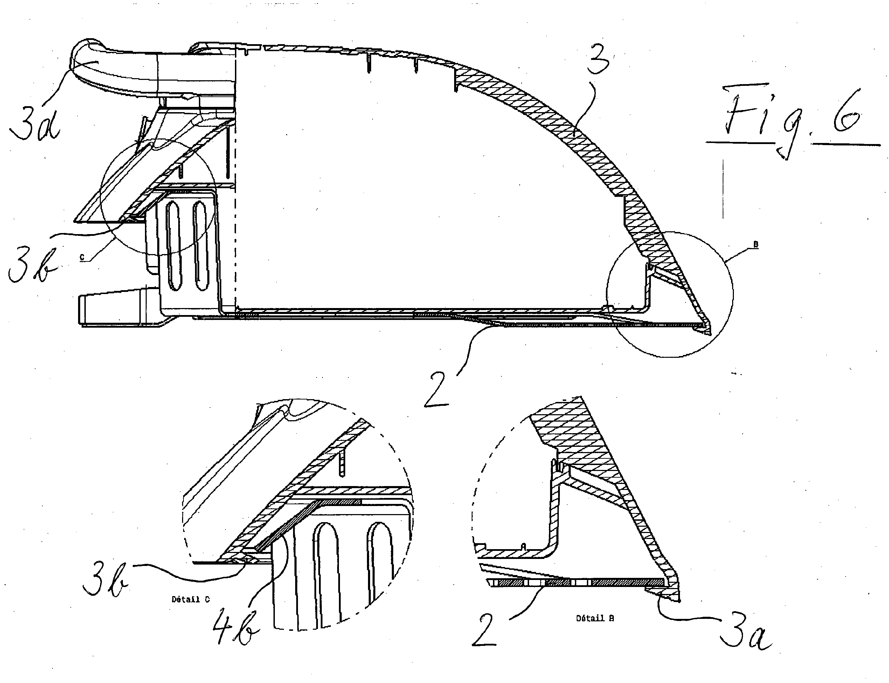

Zur Verdeutlichung der Rastverbindung zwischen Tragesystem 2 und Batterie 3 ist in Figur 6 ein Schnitt durch die Verbindungselemente dargestellt. Man erkennt hier zum einen die randständige Kante 4a am einen Ende der Basis 2, zum anderen einen der Vorsprünge 4b, 4c am gegenüberliegenden Ende der Basis 2. Die randständige Kante 4a wird von dem hakenförmig ausgebildeten Rand 3a der Batterie 3 umgriffen und fungiert wie oben beschrieben als Schwenklager für eine leichte Schwenkbewegung der Batterie. Demgegenüber korrespondieren die Vorsprünge 4b und 4c mit den nach innen ragenden, elastischen Vorsprüngen 3b bzw. 3c des Batteriegehäuses und bilden mit diesen eine lösbare Schnappverbindung.

Zum leichten Ein- und Ausrasten der Batterie aus ihrer Schnappverbindung ist oberhalb der Schnappverbindung ein Handgriff 3d an der Batterie angeordnet. Dadurch wird das Ein- und Ausrasten erleichtert.

Damit die Basis 2 eine exakte räumliche Zuordnung zwischen der randständigen Kante 4a und den Vorsprüngen 4b und 4c beibehält und auch die geometrische Zuordnung zu den elektrischen Kontakten 5 gewahrt bleibt, empfiehlt es sich, die Basis starr auszuführen, insbesondere als stabile Grundplatte aus Metall oder Kunststoff. Jedoch kann bei den Vorsprüngen 4b und 4c eine gewisse Elastizität zur Verfügung stehen, um die gewünschte Schnappverbindung mit den nachgiebigen Vorsprüngen 3b und 3c der Batterie 3 zu erleichtern.

Figur 5 zeigt die Unterseite der Batterie, also ihre Anschlussseite. Man sieht hier den Spannungsausgang der Batterie an ihren Kontakten 3e. Diese Kontakte korrespondieren mit entsprechenden Kontakten 5 des Tragesystems oder eines direkt mit Strom zu versorgenden elektrischen Gerätes.

Außerdem erkennt man eine Anschlussbuchse 13, die zum Aufladen der Batterie unter Zwischenschaltung eines Netzgerätes dient.

Schließlich ist die Batterie mit einer Entladesicherung 14 und einer Aufladesicherung 15 ausgerüstet. Während die Entladesicherung den Stromdurchgang auf etwa 35A beschränkt, ist die Aufladesicherung auf einen Maximalstrom von etwa 15A ausgelegt. Nicht zuletzt erkennt man in Figur 5 deutlich die hakenartig am unteren Gehäuserand nach innen ragenden Vorsprünge 3a, 3b und 3c für das Verrasten der Batterie am Tragesystem oder an einem elektrischen Gerät.

Schließlich enthält die Batterie noch eine elektronische Steuerung, die dafür sorgt, dass beim Anschluss der Batterie zunächst nur ein sehr kleiner Strom fließen kann, wobei dies ggf. mit einer Spannungsreduzierung gekoppelt ist. Erst dann, wenn dieser geringe Stromfluss von der elektronischen Steuerung in der Batterie detektiert worden ist, wird der Entladestrom der Batterie in voller Höhe freigegeben. Auf diese Weise wird Funkenbildung beim Anschließen der Batterie vermieden und der Verschleiß der Kontakte verringert.

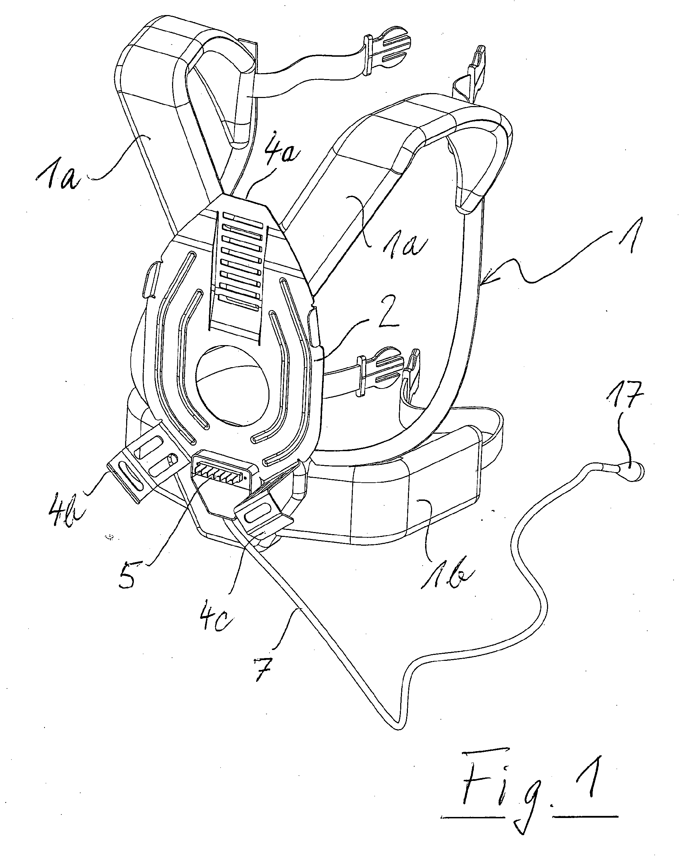

Hierzu sind die Kontakte 3a der Batterie wie auch die korrespondierenden Kontakte 5 des Tragegerätes oder eines direkt mit Strom zu versorgenden elektrischen Gerätes mit einer Vielzahl von Pins bestückt, vgl. Figur 1 und 5. Von diesen Pins sind batterieseitig nur zwei Pins aktiv: Diese liegen an einer deutlich reduzierten Batteriespannung, wobei gleichzeitig der maximale Stromfluss begrenzt ist. Vorzugsweise liegt die reduzierte Batteriespannung im Millivolt-Bereich und der maximale Stromfluss im Milliampere-Bereich. Wird die Batterie an das Tragesystem oder das anzutreibende elektrische Gerät angeschlossen, fließt zunächst nur über diese beiden genannten Pins ein geringer Strom, der von der elektronischen Steuerung in der Batterie detektiert wird. Erst nachdem die elektronische Steuerung erkennt, dass ein geringer Strom fließt, werden die übrigen Pins freigeschaltet, so dass die volle Batteriespannung und die deutlich erhöhte, reguläre Stromstärke zur Verfügung stehen.

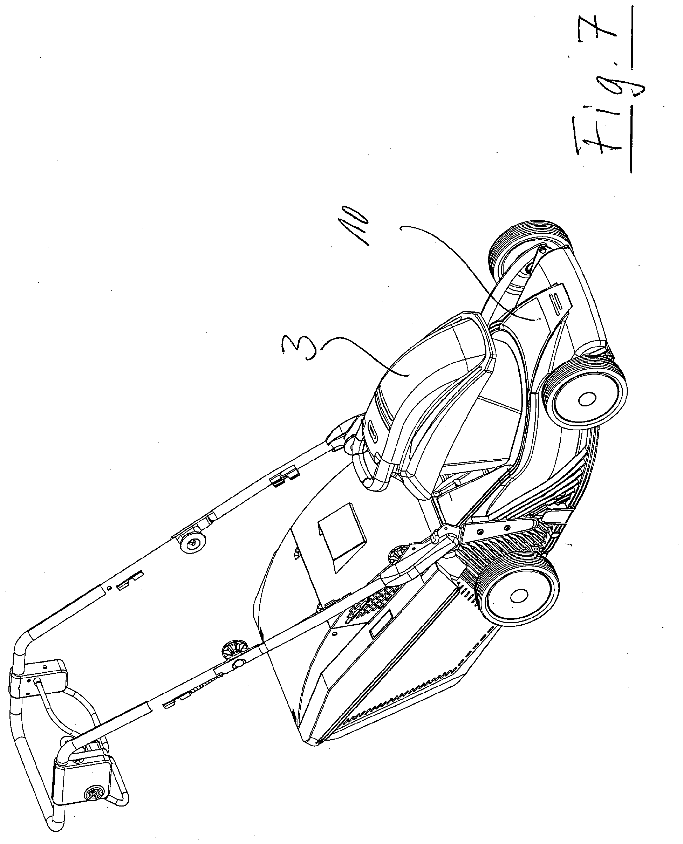

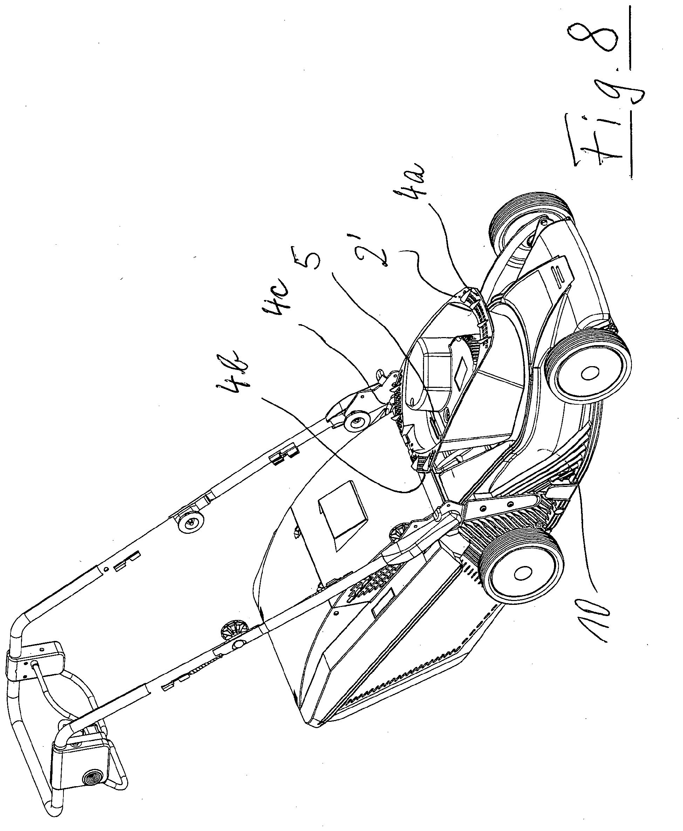

Die Figuren 7 und 8 zeigen die Batterie bei ihrem Einsatz ohne Tragesystem, nämlich bei Montage unmittelbar an dem anzutreibenden elektrischen Gerät, im Ausführungsbeispiel an einem Rasenmäher 10. Zu diesem Zweck weist der Rasenmäher an seiner Oberseite, zweckmäßig oberhalb seines Motors, eine Basis 2' auf, die mit gleichartigen Verbindungselementen 4a, 4b, 4c und elektrischen Kontakten 5 wie die Basis 2 ausgestattet ist, so dass die Batterie 3 an der Basis 2' gleichartig montiert werden kann, wie an der Basis 2 des Tragesystems 1. So erkennt man, dass die Basis 2' eine nach vorn ragende Randkante 4a und am gegenüberliegenden Rand schräg nach hinten ragende Vorsprünge 4b und 4c aufweist. Die Vorsprünge 4b und 4c liegen - anders als in der Basis 2 des Tragesystems - nahezu in der gleichen Ebene wie die nach vorn ragende Kante 4a, weil die elektrischen Kontakte 5 deutlich unterhalb dieser Ebene liegen.

Zum Anbau der Batterie wird sie mit ihrem hakenartigen Vorsprung 3a horizontal auf die vordere Randkante 4a der Basis 2' geschoben und anschließend mittels des Handgriffes 3d nach unten gedrückt, so dass ihre Vorsprünge 3b und 3c an den nach hinten vorstehenden Randkanten 4b und 4c entlang gleiten, daran etwas aufgeweitet werden, bis sie hinter diesen Randkanten einschnappen. Dieser Zustand ist in Figur 7 gezeigt.

Die Batterie 3 ist dann sowohl mechanisch wie auch elektrisch mit dem Mäher 10 verbunden.

Selbstverständlich kann die Form und Funktion der Verbindungselemente zwischen der Batterie einerseits und dem Tragesystem bzw. dem elektrischen Gerät andererseits beliebig variiert werden. Auch liegt es im Rahmen der Erfindung, anstelle des formschlüssigen Übergreifens an den Verbindungselementen 3a und 4a ebenfalls eine Rastverbindung vorzusehen oder die Rastverbindung durch eine Schraubverbindung oder dergleichen zu ersetzen, ohne dadurch das vorliegende Erfindungsprinzip zu verlassen.

## Patentansprüche

1. Kombination aus einem auf dem Rücken eines Benutzers zu tragenden Tragesystem (1), zumindest einer aufladbaren Batterie (3) und einem zu betreibenden elektrischen Gerät (10), wobei die Batterie (3) lösbar an dem Tragesystem (1) angeordnet und mittels einer flexiblen Leitung (7) an das Gerät (10) anschließbar ist, wobei das Gerät (10) vom Benutzer getragen oder verfahren werden kann,
wobei die Batterie (3) zusätzlich zu ihrem elektrischen Ausgangs-Anschluss (3e) mechanische oder magnetische Verbindungselemente (3a, 3b, 3c) aufweist, die mit entsprechenden elektrischen Anschlüssen (5) und mechanischen oder magnetischen Verbindungselementen (4a, 4b, 4c) des Tragesystems (1) und des elektrischen Gerätes (10) korrespondieren, derart, dass die Batterie (3) elektrisch und mechanisch oder magnetisch wahlweise mit dem Tragesystem (1) oder mit dem gewünschten elektrischen Gerät (10) verbindbar ist;
wobei das Tragesystem (1) an seiner dem Rücken des Benutzers zugeordneten Seite zur Aufnahme der Batterie (3) eine Basis (2) aufweist, die an ihrer vom Benutzer abgewandten Seite die genannten elektrischen Anschlüsse (5) und die mechanischen oder magnetischen Verbindungselemente (4a, 4b, 4c) aufweist;
wobei das Tragesystem (1) zumindest eine zusätzliche elektrische Anschlussbuchse (17) aufweist, an welcher die Batteriespannung anliegt, wenn eine Batterie (3) im Tragesystem (1) angeordnet ist, wobei entweder die zusätzliche Anschlussbuchse (17) direkt an dem Tragesystem (1) vorgesehen ist zum Einstecken einer an dem Gerät (10) vorhandenen flexiblen Leitung, oder wobei das Tragesystem (1) die flexible Leitung (7) umfasst, die an ihrem freien Ende die elektrische Anschlussbuchse (17) aufweist; und
wobei die elektrischen Anschlüsse (5) auf Seiten des Tragesystems (1) mit der elektrischen Anschlussbuchse (17) verbunden sind;
**dadurch gekennzeichnet,**
**dass** auch das elektrische Gerät (10) eine Basis (2') zur Aufnahme der Batterie (3) aufweist, wobei an der Basis (2) des Tragesystems (1) und an der Basis (2') des Geräts (10) jeweils mit der Batterie (3) korrespondierende elektrische Anschlüsse (5) und mechanische oder magnetische Befestigungselemente (4a, 4b, 4c) angeordnet sind.

2. Kombination nach Anspruch 1,
**dadurch gekennzeichnet,**
**dass** die mechanischen Verbindungselemente (3a, 3b, 3c bzw. 4a, 4b, 4c) der Batterie (3) und/oder des Tragesystems (1) und/oder des elektrischen Gerätes (10) zumindest teilweise elastisch ausgebildet sind und eine Schnappverbindung der Batterie (3) mit dem Tragesystem (1) oder mit dem elektrischen Gerät (10) bewirken.

3. Kombination nach einem der vorhergehenden Ansprüche,
**dadurch gekennzeichnet,**
**dass** die Batterie (3) ein Gehäuse mit überstehendem Rand aufweist und dass innerhalb und/oder unterhalb dieses überstehenden Randes die Verbindungselemente (3a, 3b, 3c) angeordnet sind.

4. Kombination nach Anspruch 1,
**dadurch gekennzeichnet,**
**dass** die mechanischen Verbindungselemente (3a, 3b, 3c; 4a, 4b, 4c) aus zwei verschiedenen Gattungen bestehen, nämlich einer ersten Gattung (3a, 4a), die eine Schwenkbewegung der Batterie (3) relativ zum Tragesystem (1) oder zu dem elektrischen Gerät (10) gestattet und einer zweiten Gattung (3b, 3c; 4b, 4c), die die genannte Schwenkbewegung nach Erreichen der Anschlussposition der Batterie blockiert.

5. Kombination nach Anspruch 4,
**dadurch gekennzeichnet,**
**dass** die Verbindungselemente (3b, 3c; 4b, 4c) der zweiten Gattung eine Schnappverbindung bewirken.

6. Kombination nach Anspruch 3,
**dadurch gekennzeichnet,**
**dass** die zur Realisierung einer Schnappverbindung elastisch ausgebildeten Verbindungselemente (3b, 3c) an der Batterie (3) angeordnet sind.

7. Kombination nach Anspruch 4,
**dadurch gekennzeichnet,**
**dass** die Verbindungselemente (3a, 3b, 3c) am äußeren Rand der Batterie (3) angeordnet sind.

8. Kombination nach Anspruch 4, 5, 6 oder 7,
**dadurch gekennzeichnet,**
**dass** die Verbindungselemente (3a) der ersten Gattung und die Verbindungselemente (3b, 3c) der zweiten Gattung annähernd an entgegengesetzten Bereichen der Batterie (3) angeordnet sind.

9. Kombination nach einem der Ansprüche 2 bis 8,
**dadurch gekennzeichnet,**
**dass** die Batterie (3) im Bereich ihrer elastisch ausgebildeten Verbindungselemente (3b, 3c) einen Handgriff (3d) aufweist.

10. Kombination nach einem der vorhergehenden Ansprüche,
**dadurch gekennzeichnet,**
**dass** das Tragesystem (1) und/oder die Batterie (3) Überlast-Sicherungen (14, 15) für den Entladestrom und für den Aufladestrom aufweist oder aufweisen.

11. Kombination nach Anspruch 10,
**dadurch gekennzeichnet,**
**dass** die Überlast-Sicherungen (14, 15) von außen zugänglich sind.

12. Kombination nach einem der vorhergehenden Ansprüche,
**dadurch gekennzeichnet,**
**dass** die Batterie (3) und/oder das Tragesystem (1) eine zusätzliche Anschlussbuchse (13) zum Aufladen der Batterie aufweist.

13. Kombination nach einem der vorhergehenden Ansprüche,
**dadurch gekennzeichnet,**
**dass** die Batterie (3) eine elektronische Steuerung enthält, die beim Anschluss der Batterie den Entladestrom auf eine die Funkenbildung vermeidende Stromstärke reduziert und erst nach Detektion eines Stromflusses den Entladestrom in voller Höhe freigibt.

## Claims

1. Combination of a carrying system (1) to be carried on the back of a user, at least one chargeable battery (3) and an electrical device (10) to be operated, wherein the battery (3) is detachably arranged on the carrying system (1) and is connectible to the device (10) by means of a flexible line (7), it being possible for the device (10) to be carried or moved by the user,
wherein the battery (3), in addition to its electrical output connection (3e), has mechanical or magnetic connecting elements (3a, 3b, 3c) which are complementary to corresponding electrical connections (5) and mechanical or magnetic connecting elements (4a, 4b, 4c) of the carrying system (1) and of the electrical device (10) in such a way that the battery (3) is electrically and mechanically or magnetically connectible, as desired, either to the carrying system (1) or to the desired electrical device (10);
wherein the carrying system (1) has, on its side associated with the user's back, a base (2) for receiving the battery (3), which base has the said electrical connections (5) and the mechanical or magnetic connecting elements (4a, 4b, 4c) on its side remote from the user; wherein the carrying system (1) has at least one additional electrical connection socket (17) to which the battery voltage is applied when a battery (3) is arranged in the carrying system (1), wherein either the additional connection socket (17) is provided directly on the carrying system (1) for insertion of a flexible line present on the device (10), or wherein the carrying system (1) comprises the flexible line (7) which has the electrical connection socket (17) at its free end; and
wherein the electrical connections (5) on the part of the carrying system (1) are connected to the electrical connection socket (17); **characterised in that**
the electrical device (10) also has a base (2') for receiving the battery (3), wherein on the base (2) of the carrying system (1) and on the base (2') of the device (10) there are arranged electrical connections (5) and mechanical or magnetic fixing elements (4a, 4b, 4c) which are in each case complementary to the battery (3).

2. Combination according to claim 1,
**characterised in that**
the mechanical connecting elements (3a, 3b, 3c and 4a, 4b, 4c) of the battery (3) and/or of the carrying system (1) and/or of the electrical device (10) are at least partly of resilient construction and effect a snap connection between the battery (3) and the carrying system (1) or the electrical device (10).

3. Combination according to either one of the preceding claims, **characterised in that**
the battery (3) has a housing with a projecting rim, and the connecting elements (3a, 3b, 3c) are arranged inside and/or below that projecting rim.

4. Combination according to claim 1,
**characterised in that**
the mechanical connecting elements (3a, 3b, 3c; 4a, 4b, 4c) consist of two different types, namely of a first type (3a, 4a), which allows a pivoting movement of the battery (3) relative to the carrying system (1) or relative to the electrical device (10), and of a second type (3b, 3c; 4b, 4c) which blocks the said pivoting movement once the connection position of the battery has been reached.

5. Combination according to claim 4,
**characterised in that**
the connecting elements (3b, 3c; 4b, 4c) of the second type effect a snap connection.

6. Combination according to claim 3,
**characterised in that**
the connecting elements (3b, 3c), which are of resilient construction to realise a snap connection, are arranged on the battery (3).

7. Combination according to claim 4,
**characterised in that**
the connecting elements (3a, 3b, 3c) are arranged at the outer rim of the battery (3).

8. Combination according to claim 4, 5, 6 or 7,
**characterised in that**
the connecting elements (3a) of the first type and the connecting elements (3b, 3c) of the second type are arranged in approximately opposite regions of the battery (3).

9. Combination according to any one of claims 2 to 8,
**characterised in that**
the battery (3) has a handgrip (3d) in the region of its resiliently constructed connecting elements (3b, 3c).

10. Combination according to any one of the preceding claims, **characterised in that**
the carrying system (1) and/or the battery (3) has or have overload protection devices (14, 15) for the discharging current and for the charging current.

11. Combination according to claim 10,
**characterised in that**
the overload protection devices (14, 15) are accessible from the outside.

12. Combination according to any one of the preceding claims, **characterised in that**
the battery (3) and/or the carrying system (1) has an additional connection socket (13) for charging the battery.

13. Combination according to any one of the preceding claims, **characterised in that**
the battery (3) contains an electronic controller which, on connection of the battery, reduces the discharging current to a current intensity that avoids sparking, and enables the discharging current to flow in full only after detection of a flow of current.

## Revendications

1. Combinaison d'un système de support (1) à porter sur le dos d'un utilisateur, d'au moins une batterie rechargeable (3) et d'un appareil électrique (10) à alimenter, la batterie (3) étant disposée de manière amovible sur le système de support (1) et pouvant être raccordée à l'appareil (10) au moyen d'un câble flexible (7), l'appareil (10) pouvant être porté ou déplacé par l'utilisateur,
dans laquelle la batterie (3) présente en plus de son raccord de sortie électrique (3e) des éléments de liaison mécanique ou magnétique (3a, 3b, 3c) qui correspondent à des raccords électriques (5) et des éléments de liaison mécanique ou magnétique (4a, 4b, 4c) correspondants du système de support (1) et de l'appareil électrique (10), de sorte que la batterie (3) peut être reliée électriquement et mécaniquement ou magnétiquement au choix au système de support (1) ou à l'appareil électrique (10) souhaité ;
dans laquelle le système de support (1) présente sur son côté associé au dos de l'utilisateur, pour recevoir la batterie (3), une base (2) qui présente lesdits raccords électriques (5) et les éléments de liaison mécaniques ou magnétiques (4a, 4b, 4c) sur son côté éloigné de l'utilisateur ;
dans laquelle le système de support (1) présente au moins une prise de raccordement électrique (17) supplémentaire à laquelle la tension de batterie est présente quand une batterie (3) est disposée dans le système de support (1), soit la prise de raccordement (17) supplémentaire étant prévue directement sur le système de support (1) pour le branchement d'un câble flexible présent sur l'appareil (10), soit le système de support (1) comprenant le câble flexible (7) qui présente la prise de raccordement électrique (17) à son extrémité libre ; et
dans laquelle les raccords électriques (5) sont reliés du côté du système de support (1) à la prise de raccordement électrique (17) ;
**caractérisée en ce**
**que** l'appareil électrique (10) présente aussi une base (2') destinée à recevoir la batterie (3), des raccords électriques (5) et des éléments de fixation mécanique ou magnétique (4a, 4b, 4c) correspondant à la batterie (3) étant chaque fois disposés sur la base (2) du système de support (1) et sur la base (2') de l'appareil (10).

2. Combinaison selon la revendication 1,
**caractérisée en ce**
**que** les éléments de liaison mécanique (3a, 3b, 3c, respectivement 4a, 4b, 4c) de la batterie (3) et/ou du système de support (1) et/ou de l'appareil électrique (10) sont conçus au moins partiellement élastiques et produisent une liaison par encliquetage de la batterie (3) avec le système de support (1) ou avec l'appareil électrique (10).

3. Combinaison selon l'une des revendications précédentes,
**caractérisée en ce**
**que** la batterie (3) présente un boîtier avec bord en saillie et que les éléments de liaison (3a, 3b, 3c) sont disposés à l'intérieur et/ou en dessous de ce bord en saillie.

4. Combinaison selon la revendication 1,
**caractérisée en ce**
**que** les éléments de liaison mécaniques (3a, 3b, 3c ; 4a, 4b, 4c) sont de deux genres différents, à savoir un premier genre (3a, 4a) qui autorise un mouvement de pivotement de la batterie (3) par rapport au système de support (1) ou à l'appareil électrique (10) et un deuxième genre (3b, 3c ; 4b, 4c) qui bloque ledit mouvement de pivotement lorsque la batterie a atteint sa position de raccordement.

5. Combinaison selon la revendication 4,
**caractérisée en ce**
**que** les éléments de liaison (3b, 3c ; 4b, 4c) du deuxième genre produisent une liaison par encliquetage.

6. Combinaison selon la revendication 3,
**caractérisée en ce**
**que** les éléments de liaison (3b, 3c) conçus élastiques pour réaliser une liaison par encliquetage sont disposés sur la batterie (3).

7. Combinaison selon la revendication 4,
**caractérisée en ce**
**que** les éléments de liaison (3a, 3b, 3c) sont disposés sur le bord extérieur de la batterie (3).

8. Combinaison selon la revendication 4, 5, 6 ou 7,
**caractérisée en ce**
**que** les éléments de liaison (3a) du premier genre et les éléments de liaison (3b, 3c) du deuxième genre sont disposés à peu près sur des zones opposées de la batterie (3).

9. Combinaison selon l'une des revendications 2 à 8,
**caractérisée en ce**
**que** la batterie (3) présente une poignée (3d) dans la zone de ses éléments de liaison (3b, 3c) conçus élastiques.

10. Combinaison selon l'une des revendications précédentes,
**caractérisée en ce**
**que** le système de support (1) et/ou la batterie (3) présente/présentent des protections contre la surcharge (14, 15) pour le courant de décharge et pour le courant de charge.

11. Combinaison selon la revendication 10,
**caractérisée en ce**
**que** les protections contre la surcharge (14, 15) sont accessibles de l'extérieur.

12. Combinaison selon l'une des revendications précédentes,
**caractérisée en ce**
**que** la batterie (3) et/ou le système de support (1) présente/présentent une prise de raccordement (13) supplémentaire pour la recharge de la batterie.

13. Combinaison selon l'une des revendications précédentes,
**caractérisée en ce**
**que** la batterie (3) contient une commande électronique qui, lors du raccordement de la batterie, réduit le courant de décharge à une intensité qui évite la formation d'étincelles et ne libère le courant de décharge en totalité qu'après détection d'une circulation de courant.
